# EUROPÄISCHE PATENTANMELDUNG

(11) **EP 3 909 892 A1**
(43) Veröffentlichungstag der Anmeldung: **17.11.2021**
(21) Anmeldenummer: 21170895.3
(22) Anmeldetag: 28.04.2021
(51) Int. Cl.: B65G 54/02

(54) **MODULARES TRANSFERSYSTEM**

(30) Priorität: 13.05.2020 DE 202020102692 U
(71) Anmelder: Pfuderer, Markus, 70199 Stuttgart (DE)
(72) Erfinder: Pfuderer, Markus, 70199 Stuttgart (DE)
(74) Vertreter: Mammel und Maser

(57) **Zusammenfassung**

Die Erfindung betrifft ein modulares Transfersystem mit zumindest einem Grundmodul (12), welches ein Grundgestell (21) umfasst, wobei zumindest ein Grundmodul (12) als eine Geradführung (16) und/oder zumindest ein weiteres Grundmodul (12) als eine Bogenführung (17) ausgebildet ist, sowie mit zumindest einem Laufwagen (14), der einen Werkstückträger (31) umfasst, an welchem eine vordere Brücke (33) und eine hintere Brücke (34) vorgesehen sind, welche gelenkig um eine vertikale Achse drehbar mit dem Werkstückträger (31) verbunden sind, sowie mit zumindest einer Führung (15), die eine Führungsebene (26) umfasst, entlang der zumindest ein Laufwagen (14) entlang einer Transportförderstrecke des zumindest einen Grundmoduls (12) verfahrbar ist, und mit einem elektromagnetischen Linearantrieb (24), welcher ein Primärteil (23) und ein Sekundärteil (41) umfasst, die zu einer Linearantriebsebene (28) ausgerichtet sind, und durch welchen der zumindest eine Laufwagen (14) entlang einer Transportförderstrecke des zumindest einen Grundmoduls (12) verfahrbar angesteuert ist, wobei die Führungsebene (26) und die Linearantriebsebene (28) rechtwinklig zueinander ausgerichtet sind.

## Beschreibung

Die Erfindung betrifft ein modulares Transfersystem mit zumindest einem Grundgestell und zumindest einem Laufwagen.

Aus der EP 3 040 296 A1 ist ein modulares Montage-Transfersystem bekannt. Dieses modulare Transfersystem umfasst mehrere Montagemodule, die in Reihe zueinander angeordnet sind und eine Transportförderstrecke bilden. Jeweils am Beginn und am Ende dieser Transportförderstrecke ist ein Umsetzmodul vorgesehen. Entlang dieser Transportförderstrecke sind ein oder mehrere Werkstückträger durch einen elektromagnetischen Linearantrieb, welcher ein Primärteil und ein Sekundärteil umfasst, verfahrbar angetrieben. Entlang der Montagemodule können verschiedentliche Handhabungseinrichtungen angeordnet werden, um in einer jeweiligen Handhabungsstation eine Bearbeitung, Montage und/
oder Handhabung durchzuführen.

Aus der DE 10 2017 201 310 A1 ist ein Transfersystem bekannt, bei welchem Läufer für ein Langstator-Linearmotorsystem vorgeschlagen werden. Diese Läufer weisen einen Wagen mit wenigstens einem oberen Rollenpaar und einem unteren Rollenpaar auf. Das obere Rollenpaar ist ineinander gegenüberliegenden Führungsschienen geführt. Gleiches gilt für das untere Rollenpaar. Die oberen und unteren Führungsschienen sind parallel zueinander beabstandet und weisen eine horizontale Führungsebene auf. Zwischen den oberen und unteren Führungsschienen ist ein Linearmotorstrang vorgesehen, der mit einem am Laufwagen angeordneten Sekundärteil zusammenwirkt. Der Linearmotorstrang bzw. das Primärteil und das Sekundärteil am Laufwagen liegen in einer Ebene, die parallel zur Führungsebene ausgerichtet ist.

Der Erfindung liegt die Aufgabe zugrunde, ein modulares Transfersystem vorzuschlagen, welches einen flexiblen Einsatz ermöglicht.

Diese Aufgabe wird durch ein modulares Transfersystem gelöst, bei welchem zumindest ein Grundmodul vorgesehen ist, wobei zumindest ein Grundmodul als eine Geradführung und/oder zumindest ein weiteres Grundmodul als eine Bogenführung ausgebildet ist und mit zumindest einem Laufwagen, der einen Werkstückträger umfasst, an welchem eine vordere Brücke und eine hintere Brücke vorgesehen ist, die gelenkig um eine vertikale Achse drehbar mit dem Werkstückträger verbunden sind. Des Weiteren ist zumindest eine Führung vorgesehen, die eine Führungsebene umfasst, durch welche der zumindest eine Laufwagen entlang einer Transportförderstrecke des zumindest einen Grundmoduls verfahrbar ist. Zum Antrieb des zumindest einen Laufwagens ist ein elektromagnetischer Linearantrieb mit einem Primärteil und einem Sekundärteil vorgesehen, die zu einer Linearantriebsebene ausgerichtet sind. Durch diesen elektromagnetischen Linearantrieb wird der zumindest eine Laufwagen entlang einer Transportförderstrecke des zumindest einen Grundmoduls verfahrbar angesteuert. Bei dem modularen Transfersystem ist ein Aufbau vorgesehen, bei welchem die Führungsebene der Führung und die Linearantriebsebene des elektromagnetischen Linearantriebes rechtwinklig zueinander ausgerichtet sind. Dadurch kann eine sehr flexible Ausgestaltung des Transfersystems sowohl bezüglich des weiteren Aufbaus des zumindest einen Laufwagens als auch der Führung zum Grundmodul ermöglicht sein. Zudem kann durch diese kompakte Anordnung auch eine hohe Flexibilität bei verschiedenen Anwendungen gegeben sein.

Durch die Ausgestaltung des zumindest einen Grundmoduls als Geradführung und/oder als Bogenführung sowie des Laufwagens kann ermöglicht sein, dass sowohl eine geradlinige Förderstrecke, als auch ein beliebiger Verlauf einer Transportförderstrecke, insbesondere eine geschlossene Förderstrecke, möglich ist. Durch die Ausgestaltung des Laufwagens mit einer vorderen und einer hinteren Brücke kann sowohl eine Verfahrbewegung entlang einer Gerade als auch eines Bogens erfolgen. Dadurch kann das modulare Transportsystem sowohl für die Montageaufgaben und/oder Handhabungsaufgaben als auch an räumliche Gegebenheiten flexibel angepasst werden. Auch kann ein wie beispielsweise für Anlagen der Elektromobilität, vorgesehen sein.

Des Weiteren kann bevorzugt vorgesehen sein, dass die Geradführung und/oder die Bogenführung des Grundmoduls derart ausgerichtet sind, dass der zumindest eine Laufwagen in einer horizontalen Ebene verfahrbar ist.

Bevorzugt ist vorgesehen, dass an einem Abschnitt des Werkstückträgers die gelenkige Anbindung der Brücke vorgesehen ist und vorzugsweise die Brücken unterhalb des Werkstückträgers schwenkbar sind. Dadurch ist ermöglicht, dass die Größe des Werkstückträgers vollständig als eine Werkstückauflage für ein transportierendes Werkstück oder eines Guts zur Verfügung steht. Zudem kann eine kompakte Anordnung geschaffen werden und dennoch ein hinreichender Bewegungsraum für die schwenkbewegliche Anordnung der Brücke zum Werkstückträger ermöglicht werden.

Des Weiteren ist bevorzugt vorgesehen, dass der Werkstückträger auf der zumindest einen Brücke aufliegend vorgesehen ist. Dadurch kann ermöglicht sein, dass auch außermittig auf den Werkstückträger wirkende Kräfte aufgenommen werden können. Um die Schwenkbewegung der Brücken zum Werkstückträger zu ermöglichen, kann dazwischenliegend eine Auflage durch Gleitelemente oder durch Stützrollen ausgeführt sein.

Eine erste Alternative des Laufwagens sieht vor, dass zumindest an einer Brücke des Laufwagens und zum Grundgestell weisend, ein Sekundärteil des Linearantriebes vorgesehen ist. An dem Grundgestell entlang der Transportförderstrecke, entlang welcher der Laufwagen verfahrbar ist, ist zum Laufwagen weisend das Primärteil vorgesehen. Dadurch ist zumindest an einer Brücke ein Sekundärteil vorgesehen, welches die Schwenkbewegung der Brücke relativ zur Werkstückauflage entsprechend der Brücke durchführt. Insbesondere bei engen Kurvenbahnen kann dadurch eine verbesserte Ansteuerung ermöglicht sein, da das Sekundärteil am Laufwagen präzise dem Primärteil folgt. Bevorzugt ist vorgesehen, dass das Sekundärteil in einer horizontalen Ebene verfahrbar zum Primärteil ausgerichtet ist.

Eine alternative Ausgestaltung des Laufwagens sieht vor, dass an einer Unterseite des Werkstückträgers des Laufwagens und zum Grundgestell weisend das Sekundärteil vorgesehen ist. An dem Grundgestell entlang der Transportförderstrecke, entlang der der Laufwagen verfahrbar ist und zu dem Laufwagen weisend, ist das Primärteil vorgesehen. Dadurch kann eine kostengünstige Ausgestaltung ermöglicht sein, da der Laufwagen nur mit einem Sekundärteil des Linearantriebs ausgestattet ist. Bevorzugt ist vorgesehen, dass das Sekundärteil in einer horizontalen Ebene verfahrbar zum Primärteil ausgerichtet ist.

Eine alternative Ausführungsform des Laufwagens sieht vor, dass die Brücken als ein U-förmiges Trägerelement ausgebildet sind, welches an dessen jeweiligem freien Ende mit der Führung verbunden ist und vorzugsweise die Führung in einer vertikalen Führungsebene ausgerichtet ist. Bei dieser Ausführungsform kann die Führung jeweils seitlich an dem Grundmodul einander gegenüberliegend und nach außen weisend vorgesehen sein, so dass eine vertikale Führungsebene zwischen einem rechten Schenkel des U-förmigen Trägerelements und dem Grundgestell und eine weitere vertikale Führungsebene zwischen einem linken Schenkel des U-förmigen Trägerelements und dem Grundgestell gegeben ist. Das U-förmige Trägerelement kann auch noch mit einem Untergriff, unterhalb des Grundgestells ausgeführt sein.

Des Weiteren ist bevorzugt vorgesehen, dass an einem horizontal ausgerichteten Abschnitt zumindest einer U-förmigen Brücke und zum Grundgestell weisend das Sekundärteil des Linearantriebes vorgesehen ist und an dem Grundgestell, entlang der Transportförderstrecke zum Laufwagen weisend, das Primärteil vorgesehen ist. Vorteilhafterweise ist das Sekundärteil in einer horizontalen Ebene verfahrbar zum Primärteil ausgerichtet.

Eine alternative Ausgestaltung zu der vorbeschriebenen Ausführungsform sieht vor, dass an einer Unterseite des Werkstückträgers des Laufwagens, der die U-förmigen Brücken umfasst, und zum Grundgestell weisend das Sekundärteil des Linearantriebes vorgesehen ist und an dem Grundgestell zwischen den beiden in einer vertikalen Führungsebene ausgerichteten Führungen, entlang denen der Laufwagen verfahrbar ist, zum Laufwagen weisend das Primärteil vorgesehen ist. Vorzugsweise ist das Sekundärteil in einer horizontalen Ebene verfahrbar zum Primärteil ausgebildet.

Eine weitere alternative Ausgestaltung des modularen Transfersystems sieht vor, dass zwei oder mehrere Laufwägen durch einen an dem Werkstückträger angreifenden Kopplungselement miteinander verbunden sind. Dies ermöglicht beispielsweise, dass zwei Laufwägen entfernt zueinander, jedoch auf gleichem Abstand zueinander, durch das Kopplungselement gehalten werden können. Beispielsweise bei großflächigen oder länglichen zu transportierenden Gütern oder Werkstücken ist dies von Vorteil. Beispielsweise können dadurch Karosserien von Fahrzeugen transportiert werden.

Vorteilhafterweise weist das Kopplungselement im Anbindungspunkt zum Werkstückträger des Laufwagens eine Werkstückaufnahme auf. Dadurch kann eine vergrößerte Werkstückauflage geschaffen werden, wobei der Laufwagen unterhalb dem Kopplungselement schwenkbar ist, so dass auch eine Verfahrbewegung entlang eines Bogens ermöglicht ist.

Die Brücke des Laufwagens ist bevorzugt als streifenförmiges oder plattenförmiges Trägerelement ausgebildet. An der jeweiligen schmalen Stirnseite des Trägerelementes ist ein Führungswagen vorgesehen. Dies ermöglicht eine einfache Ausgestaltung. Vorteilhafterweise ist vorgesehen, dass die Führungswägen an der Brücke als auch die Führungsschienen am Grundmodul in einer horizontalen Führungsebene ausgerichtet sind. Dies ermöglicht, dass eine erhöhte, auf den Werkstückträger wirkende Last transportierbar sein kann.

Die Führung kann gemäß einer ersten Ausführungsform zumindest eine Führungsschiene und entlang der Führungsschiene verfahrbare Führungswägen umfassen. Der Führungswagen hat bevorzugt lineargeführte Wälzkörper, insbesondere ist eine Kugelumlaufführung oder Rollenumlaufführung vorgesehen. Bei dieser Ausführungsform der Führung ist bevorzugt vorgesehen, dass an der streifen- oder plattenförmigen Brücke bevorzugt jeweils zwei Führungswägen vorgesehen sind, die an parallel zueinander laufenden Führungsschienen angreifen.

Eine alternative Ausführungsform der Führung sieht vor, dass zumindest eine Führungsbahn und entlang dieser Führungsbahn ein oder mehrere daran angreifende Laufrollen vorgesehen sind. Diese Laufrollen greifen an der Kontur der Führungsbahn an und/oder stützen sich daran ab. Die Führungsbahn kann eine beliebige Kontur aufweisen und beliebig ausgerichtet sein. Ein oder mehrere Laufrollen können zumindest von außen, von innen, von oben oder von unten an der Führungsbahn angreifen. Eine solche Führung kann sowohl an einer streifenförmigen oder plattenförmigen Brücke vorgesehen sein. Auch kann eine solche Führung an einer U-förmigen Brücke vorgesehen sein. An einem jeweilig äußeren Abschnitt der Brücke kann zumindest eine Laufrolle zur Führung des Laufwagens vorgesehen sein. Diese Laufrollen können beispielsweise als Profilrollen, Kegelrollen, Prismenrollen, Rundrollen, Stützrollen, Kurvenrollen oder Zylinderrollen ausgebildet sein.

Des Weiteren kann bei der Ausführungsform der Führung mit Laufrollen bevorzugt vorgesehen sein, dass die Laufrollen federnd gelagert oder über Exzenterrollen vorgespannt, an der Brücke vorgesehen sind. Dadurch kann ein Toleranzausgleich geschaffen sein.

Eine weitere alternative Ausführungsform der Führung sieht vor, dass diese zumindest eine Gleitschiene und zumindest einen Gleitschuh umfasst. Vorzugsweise ist an einem jeweiligen äußeren Abschnitt der Brücke ein Gleitschuh vorgesehen, der an einer Gleitschiene angreift.

Gemäß einer alternativen Ausführungsform kann vorgesehen sein, dass die Führung als eine Magnetführung, insbesondere eine Magnet-Schwebeführung ausgebildet ist. Solch eine Führung kann insbesondere für Rein- oder Reinsträume vorgesehen sein.

An dem Grundgestell sind zwischen den Führungsschienen das Primärteil und vorzugsweise Sensoren für ein Messsystem vorgesehen, welche durch eine Abdeckung geschützt sind. Dadurch kann eine geschlossene Anordnung geschaffen werden, die frei von äußeren Einflüssen arbeitet.

Des Weiteren ist bevorzugt vorgesehen, dass das zumindest eine an dem Laufwagen angeordnete Sekundärteil einen zum Grundgestell weisenden Abstreifer umfasst, der vorzugsweise das Sekundärteil und Messsystem umgibt. Dadurch kann ein störungsfreier Betrieb ermöglicht sein.

Des Weiteren ist bevorzugt vorgesehen, dass das zumindest eine Grundmodul als ein Weichenmodul vorgesehen ist, welches zumindest einen Führungsschienenabschnitt umfasst, der um eine vertikale Achse schwenkbar ist. Dadurch kann die Flexibilität in der Ausgestaltung einer Transportförderstrecke erhöht werden.

Des Weiteren kann bevorzugt vorgesehen sein, dass ergänzend zum Grundmodul zumindest ein Umsetzmodul vorgesehen ist, welches um eine vertikale Achse drehbar ist. Beispielsweise bei einem geradlinigen Verlauf einer Transportförderstrecke kann an einem oder an beiden Enden der Transportförderstrecke ein solches Umsetzmodul vorgesehen sein und dadurch wird ermöglicht, dass der Laufwagen um 180° gedreht wird, so dass eine in Transportförderrichtung weisende Vorderseite sowohl bei einer Verfahrbewegung auf das Umsetzmodul zu als auch von diesem weg immer vorauseilend positioniert ist. Das Umsetzmodul kann auch nur quer zur Transportrichtung verfahren um den Laufwagen mit der Vorderseite nacheilend zu positionieren. Alternativ zum Umsetzmodul kann auch ein Wendemodul vorgesehen sein, welches ermöglicht, dass die Führung um eine horizontale Achse drehbar ist. Eine solche Ausführungsform kann bevorzugt bei einem Grundmodul vorgesehen sein, welches entlang der Oberseite und der Unterseite eine Führung umfasst, entlang der der zumindest eine Laufwagen verfahrbar geführt ist.

Eine weitere bevorzugte Ausführungsform sieht vor, dass an dem Grundgestell oder an dem Grundmodul Stromschienen vorgesehen sind, und der Laufwagen zumindest einen Stromabnehmer aufweist, der entlang der Stromschiene verfahrbar geführt ist. Dadurch kann der Laufwagen zusätzlich mit Strom versorgt werden, um beispielsweise auf dem Werkstückträger vorgesehene Antriebe, Greifer, Handhabungsvorrichtungen oder dergleichen motorisch anzutreiben.

Des Weiteren kann bevorzugt beim Vorhandensein von Stromschienen am Grundgestell oder am Grundmodul und von zumindest einem Stromabnehmer am Laufwagen der Linearantrieb derart ausgebildet sein, dass das Primärteil am Laufwagen und das Sekundärteil am Grundgestell oder am Grundmodul vorgesehen ist. Durch eine solche Anordnung kann in einfacher Weise das Primärteil mit Strom versorgt werden. Die vorbeschriebenen Ausführungsformen der Laufwagen können bei einer Modifizierung mit dem Stromabnehmer dann auch eine vertauschte Anordnung des Primärteils und Sekundärteils zur Bildung des Linearantriebs aufweisen.

Eine weitere bevorzugte Ausgestaltung des modularen Transfersystems sieht vor, dass das Grundgestell als ein Strangpressprofil ausgebildet ist. Dieses kann vorteilhafterweise mehrere Kammern aufweisen, um einerseits eine Gewichtseinsparung zu ermöglichen und andererseits zumindest in einer Kammer Versorgungsleitungen, Steuerungskabel oder dergleichen zu führen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Teilansicht des modularen Transfersystems,
Figur 2 eine schematische Ansicht von vorne auf ein Grundmodul des modularen Transfersystems gemäß Figur 1,
Figur 3 eine perspektivische Ansicht auf einen Laufwagen,
Figur 4 eine schematische Ansicht von unten auf eine erste Ausführungsform des Laufwagens gemäß Figur 3,
Figur 5 eine schematische Ansicht von unten auf eine weitere Ausführungsform des Laufwagens gemäß Figur 3,
Figur 6 eine schematische Ansicht auf eine Laufwagenanordnung mit zwei Laufwagen,
Figur 7 eine perspektivische Ansicht einer alternativen Ausführungsform des Laufwagens und Grundmoduls zu Figur 1,
Figur 8 eine perspektivische Ansicht auf ein modulares Transfersystem im Umlaufbetrieb der Laufwagen,
Figur 9 eine perspektivische Ansicht auf ein Weichenmodul des Transfersystems,
Figur 10 eine perspektivische Ansicht auf eine alternative Ausführungsform des Weichenmoduls des Transfersystems,
Figur 11 eine perspektivische Teilansicht einer alternativen Ausführungsform des modularen Transfersystems zu Figur 1,
Figur 12 eine schematische Ansicht von unten auf eine erste Ausführungsform des Laufwagens gemäß Figur 11,
Figur 13 eine schematische Ansicht von unten auf eine alternative Ausführungsform des Laufwagens zu Figur 12, und
Figur 14 eine perspektivische Ansicht einer alternativen Ausführungsform zu Figur 11.

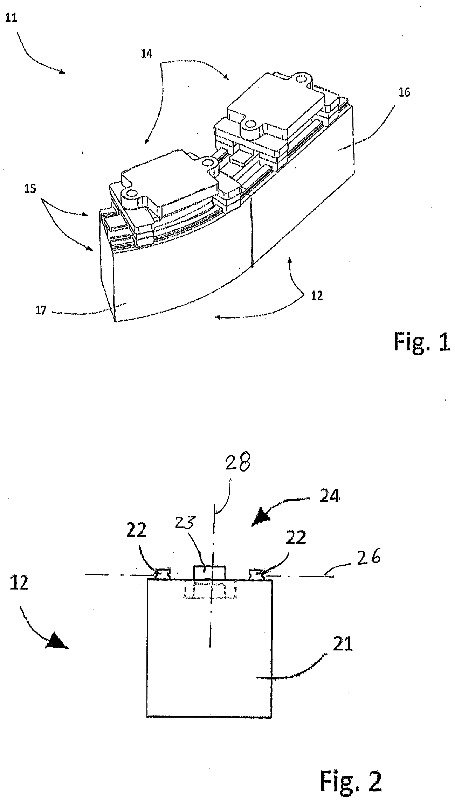

In Figur 1 ist perspektivisch ein Ausschnitt eines modularen Transfersystems 11 dargestellt. Dieses modulare Transfersystem 11 umfasst zumindest ein Grundmodul 12 sowie zumindest einen Laufwagen 14, der entlang einer durch das zumindest eine Grundmodul 12 gebildeten Förderstrecke verfahrbar ist. Das zumindest eine Grundmodul 12 kann als eine Geradführung 16 und/oder als eine Bogenführung 17 ausgebildet sein. Dadurch können bei mehreren aneinandergereihten Grundmodulen 12 eine geschlossen umlaufende Transportförderstrecke geschaffen sein.

In Figur 2 ist eine schematische Ansicht auf eine Stirnseite eines Grundmoduls 12 dargestellt. Diese Stirnseite des Grundmoduls 12 kann eine Schnittstelle zu weiteren Grundmodulen 12 darstellen. Das Grundmodul 12 umfasst ein Grundgestell 21, welches im Ausführungsbeispiel kubisch oder rechteckförmig ausgebildet ist. Dieses Grundgestell 21 kann mit einer Unterseite unmittelbar auf einem Boden aufliegen. Alternativ kann an einer Unterseite des Grundgestells 21 auch ein Träger oder eine Aufhängung oder dergleichen angebracht sein. Bei dem Vorsehen einer Aufhängung kann diese auch an Seitenwänden des Grundgestells 21 angreifen. Das Grundgestell kann 21 auch von der Decke abgehängt, als Hängetransportbahn oder im Boden eingelassen, als Bodentransportbahn vorgesehen sein.

Das Grundgestell 21 kann auch als Rohrprofil, Biegeprofil oder Strangprofil ausgestaltet sein, so dass darin eine Kabelführung für die Primärteile 23 und Sensoren ermöglicht ist.

Die Figur 1 zeigt eine erste Ausführungsform einer Führung 15 für den Laufwagen 14 auf dem Grundmodul 12 dargestellt. Diese Führung 15 umfasst Führungsschienen 22 sowie Führungswägen 36, die entlang den Führungsschienen 22 verfahrbar sind. Bevorzugt ist eine Kugelumlaufführung vorgesehen.

An einer Oberseite des Grundgestells 21 sind Führungsschienen 22 im Abstand zueinander angeordnet. Diese Führungsschienen 22 sind in einer horizontalen Führungsebene 26 ausgerichtet. Zwischen den Führungsschienen 22 ist ein Primärteil 23 eines elektromagnetischen Linearantriebs 24 vorgesehen, durch welchen eine Verfahrbewegung der Laufwägen 14 ansteuerbar ist. Dieses Primärteil 23, welches Spulen umfasst und beliebig breit und beliebig lang sein kann, kann auf einer Oberseite des Grundgestells 21 zwischen den Führungsschienen 22 vorgesehen sein. Alternativ kann dieses Primärteil 23, wie strichliniert dargestellt ist, auch in eine Vertiefung in dem Grundgestell 21 eingebracht sein. Ergänzend kann in dieser Vertiefung ein Messsystem mit mehreren Sensoren angeordnet sein, um die Verfahrstrecke des Laufwagens 14 exakt anzusteuern und auch dessen Position entlang der Transportförderstrecke exakt zu erfassen. Bei einer solchen integrierten Ausführungsform, bei welcher das Primärteil 23 und/oder die Sensoren in einer Vertiefung in dem Grundgestell 21 angeordnet sind, kann diese Vertiefung mittels einer Abdeckung geschlossen sein. Dadurch sind die Primärteile 23 und Sensoren geschützt.

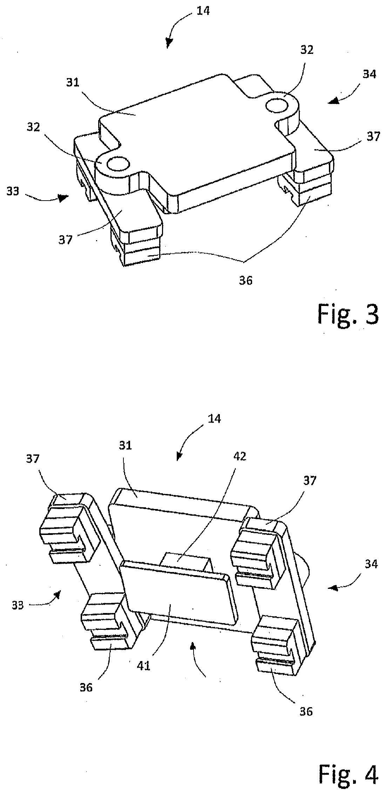

In Figur 3 ist perspektivisch der Laufwagen 14 gemäß Figur 1 dargestellt. Dieser Laufwagen 14 umfasst einen Werkstückträger 31. Dieser Werkstückträger 31 ist flächig ausgebildet. An der Oberseite des Werkstückträgers 31 können auch zusätzliche Vertiefungen, Stifte und/oder Halteelemente oder dergleichen vorgesehen sein. Diese werden in Anpassung an das zu handhabende Werkstück oder Transportgut angepasst.

Vorzugsweise an einem vorauseilenden und nacheilenden Abschnitt 32 des Werkstückträgers 31 ist jeweils eine Brücke 33, 34 gelenkig mit dem Werkstückträger 31 verbunden. Alternativ können die Brücken auch innerhalb der Kontur des Werkstückträgers gelenkig mit dem Werkstückträger verbunden sein. Vorteilhafterweise sind die Brücken 33, 34 um eine vertikale Achse drehbar zum Werkstückträger 31 vorgesehen. An jeder Brücke 33, 34 ist zumindest ein Führungswagen 36 vorgesehen. Sofern zwei Führungsschienen 22 an dem Grundgestell 21 vorgesehen sind, nehmen die Brücken 33, 34 entsprechend dem Abstand der Führungsschienen 22 die Führungswägen 36 auf. Die Brücken 33, 34 sind bevorzugt als streifenförmiges Trägerelement 37 ausgebildet. Die Anbindung der Brücken 33, 34 zum Abschnitt 32 am Werkstückträger 31 ist bevorzugt derart vorgesehen, dass die Brücken 33, 34 unterhalb des Werkstückträgers 32 schwenkbar sind. Dadurch kann eine maximale Auflagefläche bzw. Aufnahmefläche am Werkstückträger 31 verbleiben.

In Figur 4 ist eine perspektivische Ansicht von unten auf den Laufwagen 14 gemäß einer ersten Ausführungsform dargestellt. Bei dieser Ausführungsform ist vorgesehen, dass ein Sekundärteil 41 an einer Unterseite des Werkstückträgers 31 am Laufwagen 14 angeordnet ist. Dieses Sekundärteil 41 ist feststehend zum Werkstückträger 31 angeordnet. Zwischen dem Sekundärteil 41 und dem Werkstückträger 31 kann ein Distanzelement 42 vorgesehen sein, um einen Abstand zwischen dem Primärteil 23 und dem Sekundärteil 41 in Abhängigkeit des Aufbaus des Laufwagens 14 einzustellen. Das Sekundärteil 41 ist in einer horizontalen Ebene zum Primärteil 23 verfahrbar durch den Laufwagen 14 geführt. Das Sekundärteil 41 kann in einer Längsmittelachse des Werkstückträgers 31 bzw. in einer Symmetrieachse der Führungsschienen 32 liegen. Das Primärteil 23 und das Sekundärteil 41 sind zueinander ausgerichtet und liegen in einer Linearantriebsebene 28 (siehe Figur 2). Diese Linearantriebsebene 28 ist rechtwinklig zur Führungsebene 26 ausgerichtet.

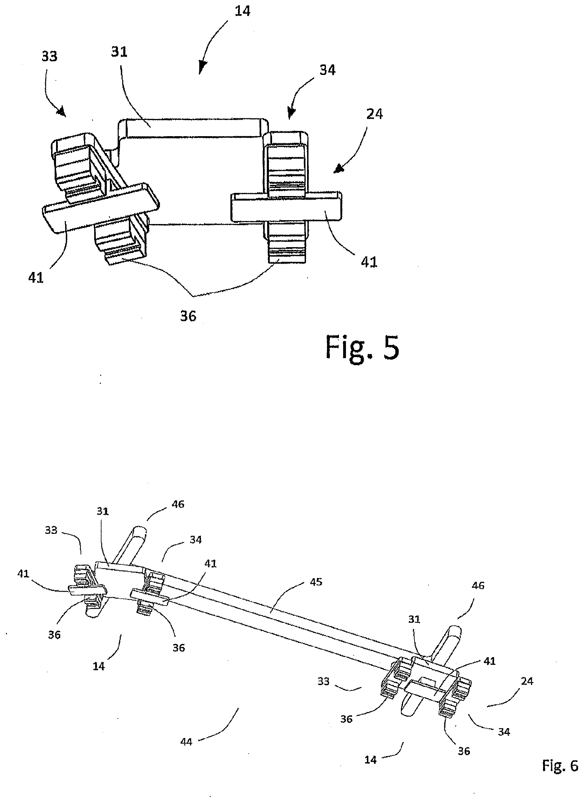

In Figur 5 ist eine perspektivische Ansicht von unten auf eine alternative Ausgestaltung des Laufwagens 14 zu Figur 4 dargestellt. Bei dieser Ausführungsform ist vorgesehen, dass an jeder Brücke 33, 34 jeweils ein Sekundärteil 41 vorgesehen ist. Dieses an der Brücke 33, 34 angeordnete Sekundärteil 41 ist zwischen den beiden Führungswagen 36 positioniert. Das Sekundärteil 41 kann sich in und entgegen der Transportrichtung gegenüber dem streifenförmigen Trägerelement 37 nach vorne und nach hinten erstrecken. Diese Ausführungsform ermöglicht, dass das Sekundärteil 41 um die vertikale Achse an den Abschnitten 32 der Werkstückträger 31 schwenkbar ist. Das Sekundärteil 41 ist in einer horizontalen Ebene zum Primärteil 23 verfahrbar durch den Laufwagen 14 geführt.

Da das Sekundärteil 41 mehrere hintereinander angeordnete Magnete umfasst, ist das Sekundärteil 41 rechteckförmig, beliebig breit und beliebig lang, ausgebildet. Sowohl bei der Ausführungsform gemäß Figur 4 als auch der Ausführungsform gemäß Figur 5 ist die Längsachse des Sekundärteils 41 parallel zu den Führungsschienen 22 ausgerichtet.

In Figur 6 ist eine Laufwagenanordnung 44 dargestellt, bei welcher beispielsweise zwei Laufwägen 14 durch ein Kopplungselement 45 miteinander verbunden sind. Dieses Kopplungselement 45 greift bevorzugt an den Werkstückträgern 31 der beiden Laufwägen 14 an. Die Anbindung des Kopplungselementes 45 an dem jeweiligen Werkstückträger 31 der Laufwägen 14 ist bevorzugt gelenkig vorgesehen, insbesondere um eine vertikale Achse an dem Werkstückträger 31 drehbar gelagert. An einer Oberseite des Kopplungselementes 45 insbesondere im Bereich der Anbindung an den Werkstückträger 31 des jeweiligen Laufwagens 14 ist bevorzugt eine Werkstückauflage 46 an dem Kopplungselement 45 vorgesehen. Eine solche Laufwagenanordnung 44 kann zur Aufnahme von länglichen oder sehr großen Werkstücken oder Transportgütern dienen, wie beispielsweise zur Aufnahme einer Karosserie eines Fahrzeuges.

Bei einer solchen Laufwagenanordnung 44 kann der vorauseilende und nacheilende Laufwagen 14 gleich ausgebildet sein oder auch als eine Kombination der Ausführungsformen gemäß Figuren 4 und 5 vorgesehen sein.

Bei den vorstehenden Ausführungsformen des Laufwagens 14 umfassen die Führungswagen 36 beispielsweise eine Kugelumlaufführung. Die Führungsschienen 22 sind entsprechend angepasst.

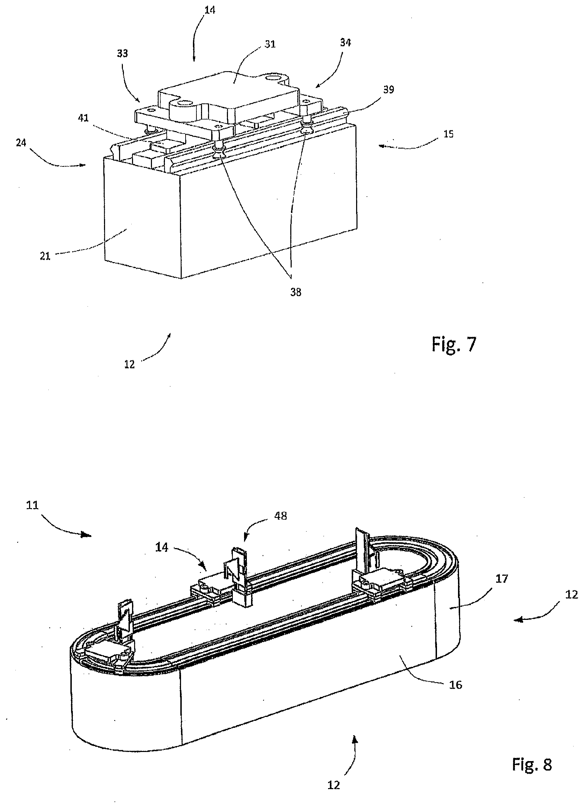

In Figur 7 ist eine alternative Ausführungsform einer Führung 15 für den Laufwagen 14 an dem Grundmodul 12 bzw. Grundgestell 21 dargestellt. Diese Führung 15 umfasst Führungsbahnen 39, welche an einer Oberseite des Grundgestells 21 vorgesehen sind. An den Brücken 33, 34 des Laufwagens 14 sind Laufrollen 38 vorgesehen, die an den Führungsbahnen 39 angreifen. Im Ausführungsbeispiel umfasst der Laufwagen an dem äußeren Abschnitt der Brücke jeweils eine Laufrolle 38, die beispielhaft als Prismenrolle ausgebildet ist. Alternativ kann auch vorgesehen sein, dass an jedem äußeren Abschnitt der Brücke zwei oder mehrere Laufrollen 38 an der Führungsbahn 39 angreifen.

Diese Laufrollen 38 und die Führungsbahn 39 können aneinander angepasst sein, so dass beispielsweise die Laufrollen als Profilrollen, Prismenrollen, Rundrollen, Stützrollen, Kurvenrollen oder Zylinderrollen oder durch eine Kombination hiervon ausgebildet sein können.

In Figur 8 ist beispielsweise ein modulares Transfersystem 11 mit einer geschlossenen Transportstrecke dargestellt. Das Grundmodul 12 besteht aus Geradführungen 16 und Bogenführungen 17, so dass eine beispielhaft ovale Transportstrecke ausgebildet ist. Entlang der Transportstrecke können Handhabungseinrichtungen 48 für eine Montage- und Prozessautomation angeordnet sein, um beispielsweise Handhabungsaufgaben und/oder Messungen und/oder Prüfungen und/oder Montageaufgaben durchzuführen. Nicht näher dargestellt sind Förderer oder Zuführeinrichtungen, um einzelne Teile- und/oder Komponenten den Handhabungseinrichtungen 48 zuzuführen. Ebenso nicht näher dargestellt sind Entnahmeplätze, um beispielsweise fertiggestellte Werkstücke von dem Laufwagen 14 zu entnehmen. Diese ovale Transportstrecke ist nur beispielhaft vorgesehen. Es kann auch eine kreisrunde Transportstrecke nach Art eines Rundtisches vorgesehen sein. Auch können rechteckförmige, L- oder U-förmige Ausführungen oder sonstige beliebige Geometrien ausgebildet werden, welche durch eine Kombination von Bogen und Geradführungen 16, 17 möglich sind. Auch kann eine offene Transportstrecke nur geradlinig, L-förmig, U-förmig, oder als eine sonstige beliebige Geometrie ausgebildet sein. Alle Transportstrecken können anstelle der Ausführung mit einer horizontalen Führungsebene auch mit zumindest einer vertikalen Führungsebene ausgebildet sein. Teilstrecken der Transportförderstrecke können angehoben, abgesenkt oder gekippt werden.

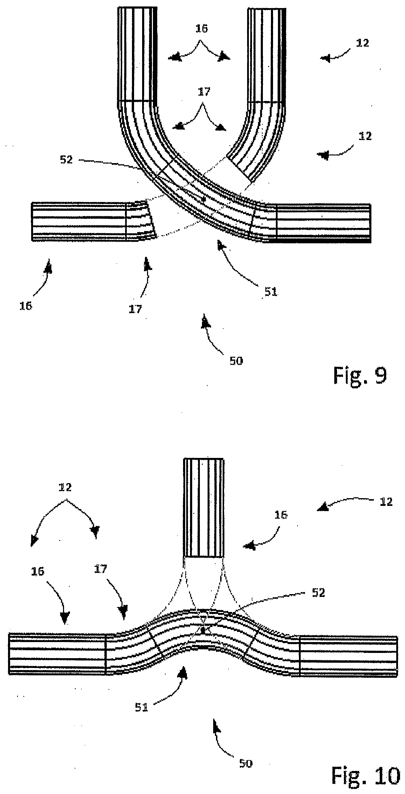

In Figur 9 kann das modulare Transfersystem 11 alternativ zur ovalen Transportstrecke gemäß Figur 8 eine weitere Form der Transportstrecke aufweisen und beispielsweise ein Weichenmodul 50 umfassen, um eine flexible Ausgestaltung zu ermöglichen. Dieses Weichenmodul 50 umfasst zumindest einen drehbaren Abschnitt 51 mit Führungsschienen 22, welche aus einer ersten Position durch eine Drehbewegung einer vertikalen Achse in einem Drehpunkt 52 in eine zweite gestrichelt dargestellte Position überführbar ist. Dieses Weichenmodul 50 stellt eine sogenannte Kreuzweiche oder Bypass-Weiche dar. Alternativ kann auch eine Kreuzung ausgeführt sein.

In Figur 10 ist eine alternative Ausgestaltung des Weichenmoduls 50 dargestellt. Dieses Weichenmodul 50 weist drei Anschlussstellen auf, so dass der Abschnitt 51, der drehbar ist, in drei verschiedene Positionen anordenbar ist, um jeweils zwei der drei Anschlussstellen zu verbinden. Die weiteren Positionen, welche der drehbare Abschnitt 51 einnehmen kann, sind gestrichelt dargestellt.

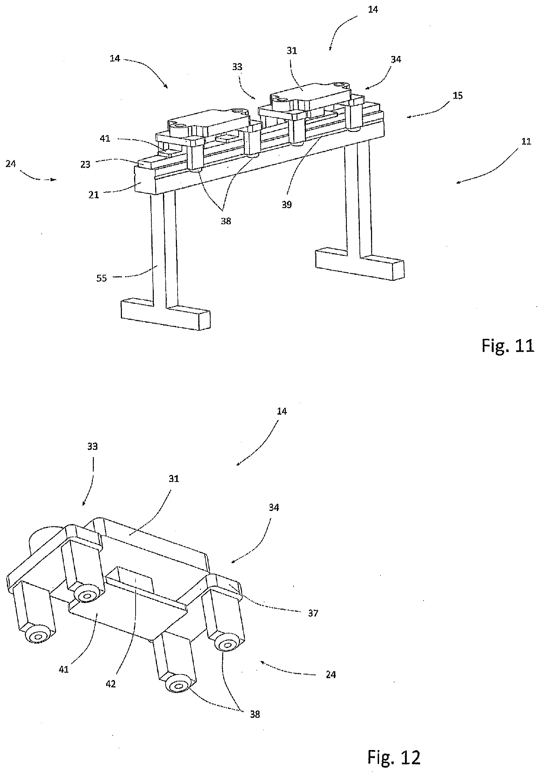

In Figur 11 ist eine Teilansicht einer alternativen Ausführungsform eines modularen Transfersystems 11 zu Figur 1 dargestellt. Bei dieser Ausführungsform ist ein Grundmodul 12 mit einem Grundgestell 21 vorgesehen, welches auf einen Träger 55 oder Ständer positioniert ist. Somit ist das Grundgestell 21 nur dafür vorgesehen, um den Linearantrieb 24 aufzunehmen und die Laufwägen 14 zu führen. Durch die Ankopplung der Träger 55 kann eine Anpassung in der Höhe, in der Positionierung des Grundgestells 21 und/oder eine beliebige Anpassung an einen Untergrund erfolgen.

Bei dieser Ausführungsform des Grundmoduls 21 kann eine Führung 15 vorgesehen sein, wie diese in Figur 1 dargestellt ist. Alternativ kann auch eine Führung 15 vorgesehen sein, welche aus Führungsbahnen 39 und Laufrollen 38 besteht. Dabei ist vorgesehen, dass an den Seitenwänden des Grundgestells 21 jeweils zumindest eine Führungsbahn 38 vorgesehen ist. Dadurch wird auf jeder Außenseite des Grundgestells 21 eine vertikale Führungsebene gebildet, entlang welcher der Laufwagen 14 verfahrbar ist. Dieser Laufwagen 14 gemäß Figur 11 entspricht im Aufbau dem der Figur 3. Abweichend hierzu ist vorgesehen, dass das Trägerelement 37 nicht streifenförmig, sondern U-förmig ausgebildet ist. Am jeweiligen Ende der freien Schenkel des U-förmigen Trägerelementes 37 ist zumindest eine Laufrolle 38 vorgesehen. Auch können mehrere Laufrollen 38 an dem Trägerelement 37 vorgesehen sein. Ebenso können weitere Stütz- und/oder Laufrollen 38 an einer Innenseite der U-förmigen Schenkel des Trägerelementes 37 vorgesehen sein, die zumindest zu der einen Führungsbahn 39 ausgerichtet sind.

In Figur 12 ist eine perspektivische Ansicht des Laufwagens 14 gemäß Figur 11 dargestellt. Diese entspricht im Aufbau bezüglich des Sekundärteils 41 der Ausführungsform gemäß Figur 4. Das Sekundärteil 41 ist an einer Unterseite des Werkstückträgers 31 angeordnet. Das Sekundärteil 41 kann über ein Distanzelement 42 daran befestigt sein. Dadurch ist das Sekundärteil 41 horizontal verfahrbar zum Primärteil 23 am Laufwagen 14 geführt.

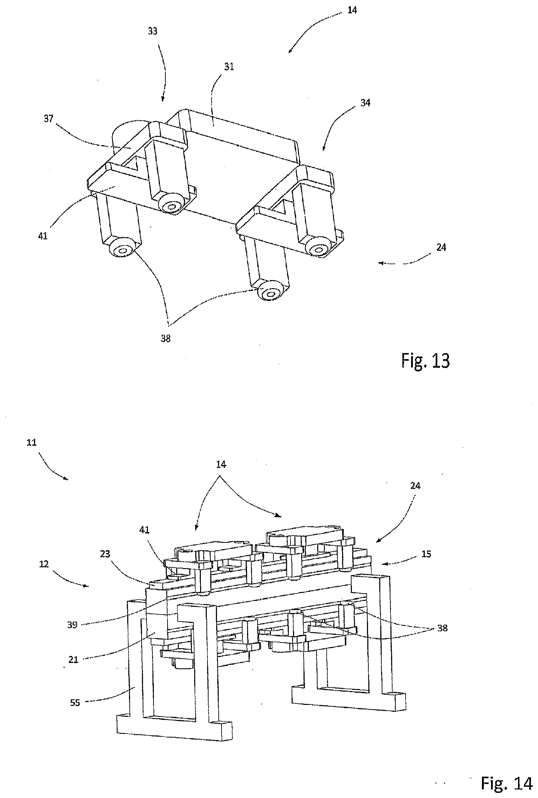

Die Figur 13 zeigt eine alternative Ausführungsform des Laufwagens 14 zu Figur 12. Bei dieser Ausführungsform ist in Analogie zur Ausführungsform gemäß Figur 5 vorgesehen, dass an jeder Brücke 33, 34 ein Sekundärteil 41 vorgesehen ist. Die Brücke 33, 34 des Laufwagens 14 ist U-förmig ausgebildet. An einer Unterseite eines horizontalen Abschnitts der U-förmigen Brücke 33, 34 ist das Sekundärteil vorgesehen. Das Sekundärteil 41 ist somit zwischen den beiden parallelen Schenkeln des U-förmigen Trägerelementes 37 angeordnet. Auch bei dieser Ausführungsform sind die Sekundärteile 41 entlang einer horizontalen Ebene ausgerichtet und zum Primärteil 23 verfahrbar.

In Figur 14 ist eine alternative Ausführungsform zu Figur 11 dargestellt. Diese Ausführungsform umfasst ebenfalls einen Träger 55, welcher zwei Grundgestelle 21 umfasst, die spiegelbildlich zu einer horizontalen Ebene zueinander ausgerichtet und von dem Träger 55 aufgenommen sind. Das obere Grundgestell 21 entspricht im Hinblick auf die Führung 15 für die Laufwägen 14 der Ausführungsform in Figur 11. Das untere Grundgestell 21 ist identisch zum oberen Grundgestell 21 ausgebildet. Alternativ können die Grundgestelle 21 auch als ein Grundgestell ausgebildet sein. Bei dieser Ausführungsform können die Laufwägen 14 entlang der oberen Transportförderstrecke in die eine Richtung und entlang der unteren Transportförderstrecke in die entgegengesetzte Richtung verfahren werden.

Am zumindest einen Ende an einer solchen Anordnung kann gemäß einer ersten Ausführungsform ein Wendemodul, welches um eine horizontale Achse schwenkbar ist, angeordnet sein. Dieses Wendemodul weist einen analogen spiegelbildlichen Aufbau der Grundgestelle 21 auf. Deren Länge entspricht der Länge von einem, zwei oder mehreren Laufwägen 14. Sobald beispielsweise ein oberer Laufwagen 14 auf das Wendemodul aufgefahren ist, kann eine Schwenkbewegung um 180° eingeleitet werden, so dass dieser Laufwagen 14 auf der unteren Transportförderstrecke wieder verfahren werden kann.

## Patentansprüche

1. Modulares Transfersystem
- mit zumindest einem Grundmodul (12), welches ein Grundgestell (21) umfasst, wobei zumindest ein Grundmodul (12) als eine Geradführung (16) und/oder zumindest ein weiteres Grundmodul (12) als eine Bogenführung (17) ausgebildet ist,
- mit zumindest einem Laufwagen (14), der einen Werkstückträger (31) umfasst, an welchem eine vordere Brücke (33) und eine hintere Brücke (34) vorgesehen ist, welche gelenkig um eine vertikale Achse drehbar mit dem Werkstückträger (31) verbunden sind,
- mit zumindest einer Führung (15), die eine Führungsebene (26) umfasst, entlang der zumindest ein Laufwagen (14) entlang einer Transportförderstrecke des zumindest einen Grundmoduls (12) verfahrbar ist, und
- mit einem elektromagnetischen Linearantrieb (24), welcher ein Primärteil (23) und ein Sekundärteil (41) umfasst, die zu einer Linearantriebsebene (28) ausgerichtet sind, und durch welchen der zumindest eine Laufwagen (14) entlang einer Transportförderstrecke des zumindest einen Grundmoduls (12) verfahrbar angesteuert ist,
- wobei die Führungsebene (26) und die Linearantriebsebene (28) rechtwinklig zueinander ausgerichtet sind.

2. Modulares Transfersystem nach Anspruch 1, **dadurch gekennzeichnet, dass** an einem Abschnitt (32) des Werkstückträgers (31) die gelenkige Anbindung der Brücken (33, 34) vorgesehen ist und vorzugsweise die Brücken (33, 34) unterhalb des Werkstückträgers (31) schwenkbar sind, und insbesondere der Werkstückträger (31) auf der zumindest einen Brücke (33, 34) aufliegend vorgesehen ist.

3. Modulares Transfersystem nach einem der vorhergehenden Ansprüche, **dadurch gekennzeichnet, dass** die Brücken (33, 34) als streifenförmiges oder plattenförmiges Trägerelement (37) ausgebildet sind, welches an dessen jeweiligen schmalen Stirnseiten mit der Führung (15) verbunden ist und vorzugsweise in einer horizontalen Führungsebene zu dem Grundgestell (21) ausgerichtet ist.

4. Modulares Transfersystem nach einem der vorhergehenden Ansprüche, **dadurch gekennzeichnet, dass** zumindest an der einen Brücke (33, 34) des Laufwagens (14) und zum Grundgestell (12) weisend das Sekundärteil (41) des Linearantriebs (24) vorgesehen ist und an dem Grundgestell (21) entlang der Transportförderstrecke, entlang welcher der Laufwagen (14) verfahrbar ist, zum Laufwagen (14) weisend das Primärteil (23) vorgesehen ist und vorzugsweise das Sekundärteil (41) in einer horizontalen Ebene verfahrbar zum Primärteil (23) ausgerichtet ist.

5. Modulares Transfersystem nach einem der Ansprüche 1 oder 2, **dadurch gekennzeichnet, dass** an einer Unterseite des Werkstückträgers (31) des Laufwagens (14) und zum Grundgestell (21) weisend das Sekundärteil (41) des Linearantriebes (24) vorgesehen ist und an dem Grundgestell (21) entlang der Transportförderstrecke entlang welcher der Laufwagen (14) verfahrbar ist, zum Laufwagen (14) weisend das Primärteil (23) vorgesehen ist, und vorzugsweise das Sekundärteil (41) in einer horizontalen Ebene verfahrbar zum Primärteil (23) ausgerichtet ist.

6. Modulares Transfersystem nach einem der Ansprüche 1 oder 2, **dadurch gekennzeichnet, dass** die Brücken (33, 34) als ein U-förmiges Trägerelement (37) ausgebildet sind, welches an dessen jeweiligen Enden mit der Führung (15) verbunden ist und vorzugsweise die Führung (15) in einer horizontalen Führungsebene zu dem Grundgestell (12) ausgerichtet ist.

7. Modulares Transfersystem nach Anspruch 6, **dadurch gekennzeichnet, dass** an einem horizontal ausgerichteten Abschnitt der U-förmigen Brücke (33, 34) des Laufwagens (14) das Sekundärteil (41) des Linearantriebes (24) vorgesehen ist und an dem Grundgestell (21) entlang der Transportförderstrecke, entlang welcher der Laufwagen (14) verfahrbar ist, zum Laufwagen (14) weisend, das Primärteil (23) vorgesehen ist, und vorzugsweise das Sekundärteil (41) in einer horizontalen Ebene zum Primärteil (23) verfahrbar ausgerichtet ist oder dass an einer Unterseite des Werkstückträgers (31) des Laufwagens (14) und zum Grundgestell (21) weisend, das Sekundärteil (41) des Linearantriebes (24) vorgesehen ist und an dem Grundgestell (21) entlang der Transportförderstrecke, entlang welcher der Laufwagen (14) verfahrbar ist, zum Laufwagen (14) weisend das Primärteil (23) vorgesehen ist und vorzugsweise das Sekundärteil (41) in einer horizontalen Ebene verfahrbar zum Primärteil (23) ausgerichtet ist.

8. Modulares Transfersystem nach einem der vorhergehenden Ansprüche, **dadurch gekennzeichnet, dass** zwei oder mehrere Laufwägen (14) eine Laufwagenanordnung (44) bilden, die durch ein Kopplungselement (45) miteinander verbunden sind und vorzugsweise das Kopplungselement (25) im Anbindungspunkt zum Werkstückträger (31) des jeweiligen Laufwagens (14) eine Werkstückauflage (46) aufweist.

9. Modulares Transfersystem nach einem der vorhergehenden Ansprüche, **dadurch gekennzeichnet,**
- **dass** die Führung (15) zumindest eine Führungsschiene (22) und entlang der Führungsschiene (22) zumindest einen verfahrbaren Führungswagen (36) umfasst, die insbesondere eine Kugelumlaufführung oder Rollenumlaufführung bildet und vorzugsweise zumindest ein Führungswagen (36) an der Brücke (33, 34) des Laufwagens (14) vorgesehen ist, oder
- **dass** die Führung (15) zumindest eine Führungsbahn (39) und entlang der Führungsbahn (39) ein oder mehrere daran geführte Laufrollen (38) umfasst, insbesondere, Profilrollen, Kegelrollen, Prismenrollen, Rundrollen, Stützrollen, Kurvenrollen oder Zylinderrollen und vorzugsweise zumindest eine Laufrolle (38) an der Brücke (33, 34) vorgesehen ist und vorzugsweise die Laufrollen (38) federnd gelagert oder über Exzenterrollen vorgespannt, an der Brücke (33, 34) vorgesehen sind, oder
- **dass** die Führung (15) zumindest eine Gleitschiene und zumindest einen Gleitschuh umfasst und vorzugsweise der zumindest eine Gleitschuh an der Brücke (33, 34) vorgesehen ist, oder
- **dass** die Führung (15) als eine Magnetführung, insbesondere als eine Magnet-Schwebeführung ausgebildet ist.

10. Modulares Transfersystem nach einem der vorhergehenden Ansprüche, **dadurch gekennzeichnet, dass** an dem Grundgestell (21) das Primärteil (23) und vorzugsweise Sensoren eines Messsystems in einer Vertiefung zwischen den Führungsschienen (22) vorgesehen sind, welche durch eine vorzugsweise aus nicht magnetischem Material bestehende Abdeckung geschlossen ist.

11. Modulares Transfersystem nach einem der vorhergehenden Ansprüche, **dadurch gekennzeichnet, dass** das zumindest eine dem Laufwagen (14) zugeordnete Sekundärteil (41) einen zum Grundgestell (21) weisenden Abstreifer umfasst, der vorzugsweise das Sekundärteil (41) und/oder das Messsystem umgibt.

12. Modulares Transfersystem nach einem der vorhergehenden Ansprüche, **dadurch gekennzeichnet, dass** zumindest ein Weichenmodul (50) vorgesehen ist, welches zumindest einen um einen Drehpunkt (52) drehbaren, die Führungsschienen (22) aufnehmenden Abschnitt (51) aufweist, der um eine vertikale Achse schwenkbar ist.

13. Modulares Transfersystem nach einem der vorgehenden Ansprüche, **dadurch gekennzeichnet, dass** zumindest ein Umsetzmodul vorgesehen ist, welches um eine vertikale Achse drehbar ist und/oder dass zumindest ein Wendemodul vorgesehen ist, welches um eine horizontale Drehachse drehbar ist.

14. Modulares Transfersystem nach einem der vorhergehenden Ansprüche, **dadurch gekennzeichnet, dass** an dem Grundgestell (12) oder dem Grundmodul (21) Stromschienen vorgesehen sind und der Laufwagen (14) zumindest einen Stromabnehmer aufweist, der entlang den Stromschienen verfahrbar geführt ist, und vorzugsweise der Laufwagen (14), der zumindest einen Stromabnehmer aufweist, der entlang den Stromschienen verfahrbar geführt ist, das Primärteil (23) aufweist und dass das Sekundärteil (41) des Linearantriebes (12) an dem Grundgestell (21) oder dem Grundmodul (12) vorgesehen ist.

15. Modulares Transfersystem nach einem der vorhergehenden Ansprüche, **dadurch gekennzeichnet, dass** das Grundgestell (21) als ein Strangpressprofil ausgebildet ist, welches vorzugsweise mehrere Kammern umfasst.
